# FASCICULE DE BREVET EUROPEEN

(11) **EP 1 809 467 B1**
(45) Date de publication et mention de la délivrance du brevet: **09.12.2009**
(21) Numéro de dépôt: 05815102.8
(22) Date de dépôt: 27.10.2005
(51) Int. Cl.: B29C 49/54

(54) **MOULE POUR UNE MACHINE DE SOUFFLAGE DE RÉCIPIENTS ET PROCÉDÉ DE FABRICATION DE RÉCIPIENTS À L'AIDE D'UN TEL MOULE**
FORM FÜR EINE BEHÄLTERBLASFORMUNGSVORRICHTUNG UND VERFAHREN ZUR HERSTELLUNG VON BEHÄLTERN MIT EINER SOLCHEN FORM
MOULD FOR A CONTAINER BLOW MOULDING MACHINE AND METHOD OF PRODUCING CONTAINERS USING ONE SUCH MOULD

(30) Priorité: 10.11.2004 FR 0411998
(43) Date de publication de la demande: 25.07.2007
(73) Titulaire: SIDEL PARTICIPATIONS, 76930 Octeville-sur-Mer (FR)
(72) Inventeur: TONGA, Jules, F-76930 Octeville-Sur-Mer (FR)
(74) Mandataire: Bérogin, Francis
(86) Numéro de dépôt international: PCT/FR2005/002698
(87) Numéro de publication internationale: WO 2006/051182

(56) Documents cités:
- EP-A- 1 298 067
- US-A- 5 469 612
- US-A1- 2002 195 749

## Description

L'invention a trait au soufflage des récipients à partir d'ébauches, généralement en matière thermoplastique.

Rappelons que le soufflage d'un récipient a lieu dans un moule dont la paroi définit une cavité au sein de laquelle est introduite l'ébauche, cette dernière venant, au cours du soufflage, épouser la paroi sous l'effet de la pression gazeuse élevée qui règne dans l'ébauche, préalablement chauffée de manière à permettre sa déformation plastique.

Un besoin s'est exprimé, pour certaines applications de munir les récipients d'une poignée qui définit, avec le corps du récipient, une ouverture permettant le libre passage de la main.

A ce jour, la fabrication de ce type de récipient peut être réalisée suivant deux techniques distinctes.

La première consiste à mouler le récipient par injection, la poignée étant formée d'un bloc avec le corps du récipient auquel elle se rattache. Mais, comme déjà indiqué, la présente demande vise la technique du soufflage. Aussi, la technique du moulage par injection est-elle ici hors sujet.

La seconde technique consiste à réaliser le corps du récipient par soufflage autour d'une poignée rapportée, introduite dans le moule préalablement au soufflage.

Cette technique, exposée dans le brevet européen délivré sous le numéro EP-1 204 524 et dont la demanderesse est à l'origine, a démontré qu'il est possible de réaliser un récipient à poignée par soufflage. Néanmoins, elle nécessite une cinématique complexe et croûteuse pour la mise en place de la poignée, la synchronisation de l'ensemble des opérations s'avérant particulièrement difficile à maîtriser et générant, malgré les efforts réalisés, une diminution de la cadence.

Il a récemment été proposé de former directement dans le récipient, lors du soufflage, des empreintes en creux pouvant ensuite recevoir une poignée par encliquetage.

Suivant cette technique, décrite dans le brevet américain US 5 649 612 qui représente le préambule de la revendication 1, on forme dans la cavité du moule des protubérances rétractables autour desquelles vient se former le récipient. Au cours du soufflage, ces protubérances sont déplacées plus avant dans la cavité pour former complètement les empreintes précitées.

En plus le brevet américain US 5649612 décrit aussi un procédé de fabrication d'un récipient par soufflage à partir d'une ébauche en matière thermoplastique, ce procédé mettant en oeuvre un moule comportant une paroi définissant une cavité destinée à recevoir une ébauche, ainsi qu'au moins un insert de moulage qui, muni d'un ergot, est monté déplaçable par rapport à la paroi, entre:
- une position sortie dans laquelle l'ergot s'étend au moins en partie en saillie par rapport à la paroi, vers l'intérieur de la cavité et
- une position rétractée dans laquelle l'ergot se trouve escamoté à l'intérieur de la paroi,
ce procédé comportant les étapes consistant à:
- introduire l'ébauche dans la cavité;
- placer l'insert de moulage dans sa position sortie;
- former le récipient par soufflage ou étirage/soufflage de l'ébauche dans la cavité de sorte à laisser sur le récipient formé au moins une empreinte en creux, complémentaire dudit ergot;
- une fois le récipient formé, placer l'insert de moulage dans sa position rétractée;
- retirer du moule le récipient ainsi formé,
comme décrit dans une partie de la revendication 12.

Si en théorie cette technique permet de réaliser sur le récipient des empreintes autorisant le montage de la poignée, en réalité il existe un risque de perforation dé la paroi du récipient par les protubérances au cours du soufflage.

Par ailleurs, d'un point de vue structurel, les protubérances sont formées aux extrémités de bras mobiles montés sur des vérins qui assurent leur déplacement. Ici encore, cette technique, séduisante en théorie, est difficilement transposable à la pratique. En effet, les bras ont tendance, du fait de leur porte-à-faux important, à s'arc-bouter et coincer lors de leur déplacement. De fait, à leur extrémité conformée en protubérance s'exerce, sous la pression régnant dans le récipient en cours de soufflage, une force qui s'oppose à la force de poussée du vérin qui s'exerce à l'extrémité opposée, la résultante de ces forces étant un couple qui tend à faire pivoter le bras autour d'un axe perpendiculaire à sa direction de déplacement.

Une autre technique, décrite dans la demande de brevet américain publiée sous le numéro US 2002/0195749, propose un procédé de moulage d'un article suivant lequel on introduit initialement dans la cavité de moulage un manchon qui s'étend autour d'une tige fixe par rapport au moule et dont le diamètre extérieur correspond au diamètre interne d'une empreinte à former dans la paroi de l'article, puis, après moulage, à laisser reposer l'article pendant une durée donnée, avant de rétracter le manchon de manière que la paroi de l'article vienne épouser la tige.

Se pose dans cette technique un problème de démoulage, car la tige reste fixe par rapport au moule. Dans ces conditions, des moyens de préhension particuliers doivent être prévus pour séparer l'article du moule en fin de soufflage, ce qui grève à la fois les coûts du moule et les temps de cycle.

Les inventeurs se sont efforcés, tout en restant dans la technique du soufflage, de proposer une solution alternative aux techniques connues, qui permette notamment de résoudre les problèmes évoqués ci-dessus.

A cet effet, les inventeurs proposent, en premier lieu, un moule pour une machine de soufflage de récipients à partir d'ébauches, ce moule comportant une paroi définissant une cavité destinée à recevoir une ébauche et comportant au moins un insert de moulage qui, muni d'un ergot, est monté déplaçable par rapport à la paroi, entre :
- une position sortie dans laquelle l'ergot s'étend au moins en partie en saillie par rapport à la paroi, vers l'intérieur de la cavité, et
- une position rétractée dans laquelle l'ergot se trouve escamoté à l'intérieur de la paroi,
ce moule étant **caractérisé en ce que** l'insert se présente sous la forme d'un suiveur de came, le moule comportant un mécanisme d'actionnement qui comprend une came montée mobile par rapport à la paroi, entre :
- une position inactive dans laquelle elle permet à l'insert d'adopter sa position rentrée, et
- une position active dans laquelle elle déplace l'insert vers sa position sortie.

Lors du soufflage, la matière de l'ébauche vient épouser l'ergot en saillie, qui forme ainsi dans le corps du récipient une empreinte en creux avec laquelle viendra coopérer ultérieurement une poignée rapportée de préhension du récipient. Il est à noter que la mécanique came/suiveur de came permet d'obtenir un fonctionnement plus fiable du moule.

Suivant un mode de réalisation, la cavité s'étendant suivant un axe principal, l'ergot s'étend, dans la position sortie, sensiblement parallèlement à cet axe, en étant par exemple monté mobile en translation par rapport à la paroi du moule.

Suivant un mode de réalisation, la paroi du moulé présente une excroissance vers l'intérieur de la cavité, excroissance dans laquelle l'insert est reçu.

L'insert est par exemple déplaçable en translation suivant une direction parallèle à un axe principal de la cavité du moule, la came étant quant à elle déplaçable en translation suivant une direction perpendiculaire à cet axe principal.

Suivant un mode de réalisation, la came présente une surface de came oblique par rapport à la direction de déplacement de la came, qui coopère avec une surface d'appui ménagée sur le suiveur de came, oblique par rapport à la direction de déplacement du suiveur de came.

Le suiveur de came est par exemple muni d'au moins un pion qui s'étend en saillie perpendiculairement à la direction de déplacement du suiveur de came, ce pion coopérant avec une rainure ménagée dans la came parallèlement à la surface de came.

Le mécanisme d'actionnement peut comporter un ressort de rappel qui sollicite la came vers sa position inactive, ainsi que, par exemple, un vérin muni d'une tige à une extrémité de laquelle est montée la came.

Le moule peut également comporter un ressort de rappel qui sollicite l'insert vers sa position rétractée.

Suivant un mode de réalisation, le moule comporte, en pratique, deux inserts munis chacun d'un ergot, et déplaçables conjointement par rapport à la paroi, entre :
- une position sortie dans laquelle les ergots s'étendent tous deux au moins en partie en saillie par rapport à la paroi, vers l'intérieur de la cavité, et
- une position rétractée dans laquelle les ergotes se trouvent tous deux escamotés à l'intérieur de la paroi.
Les inventeurs proposent également, en second lieu, un procédé de fabrication d'un récipient par soufflage comme décrit dans la revendication 12.

Suivant un mode de réalisation, l'étape de mise en place de l'insert est réalisée pendant l'étape de soufflage avant que la matière de l'ébauche n'atteigne les ergots.

Le procédé comporte enfin, pour la finition du produit, une étape consistant, après formation du récipient, à monter sur celui-ci une poignée rapportée munie d'au moins une griffe apte à coopérer de manière amovible avec une empreinte en creux formée, dans la paroi du récipient, par l'ergot de l'insert lors de l'étape de formage du récipient.

D'autres objets et avantages de l'invention apparaîtront à la lumière de la description faite ci-après en référence aux dessins annexés dans lesquels :
- la figure 1 est une vue en perspective partielle montrant un moule selon l'invention, en position rétractée des inserts ;
- la figure 2 est une vue en perspective du moule de la figure 1 dans la même position, suivant un autre angle de vue ;
- la figure 3 est une vue en coupe d'un moule suivant l'invention, dans la position rétractée des inserts de moulage ;
- la figure 4 est une vue en coupe suivant le plan IV-IV de la figure 3 ;
- la figure 5 est une vue analogue à la figure 3, dans la position sortie des inserts de moulage ;
- la figure 6 est une vue en coupe suivant le plan VI-VI de la figure 5 ;

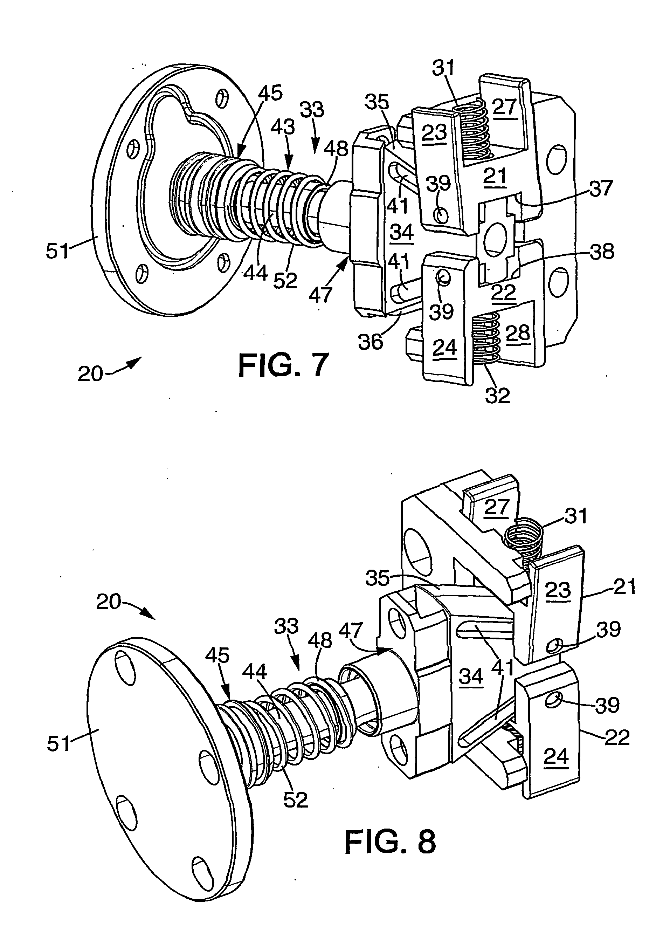

- les figures 7 et 8 sont des vues en perspective montrant les inserts de moulage du moule des figures précédentes, associées à leur mécanisme d'actionnement ; et
- les figures 9 et 10 illustrent l'étape de montage d'une poignée rapportée sur un récipient formé au moyen d'un moule tel que représenté sur les figures précédentes.

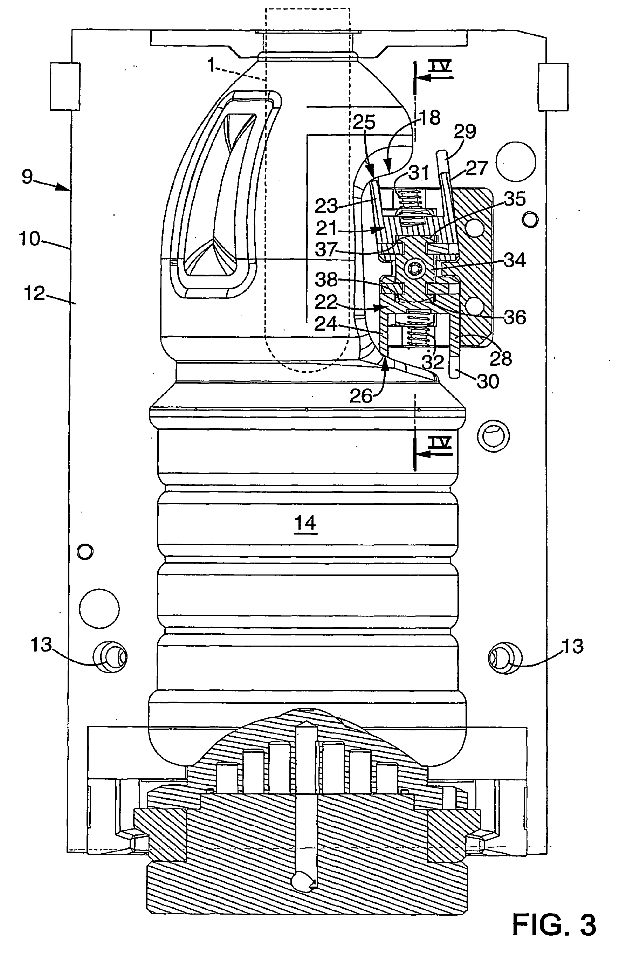

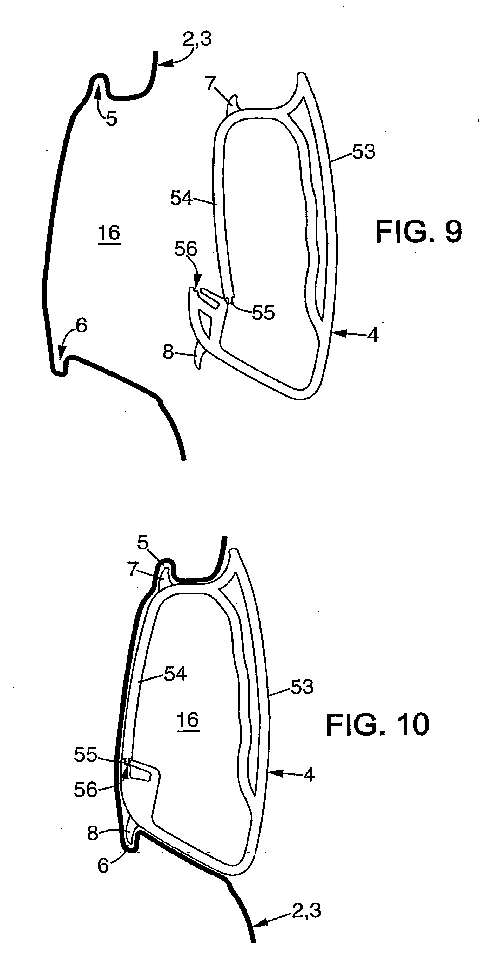

L'on souhaite réaliser par soufflage ou par étirage-soufflage, à partir d'une ébauche 1 en matière thermoplastique (il s'agit en l'occurrence, comme représenté en traits interrompus sur la figure 3, d'une préforme réalisée au préalable par moulage par injection), un récipient 2 ayant un corps 3 sur lequel on accrochera ensuite une poignée 4 rapportée, montée par encliquetage comme cela est représenté sur les figures 9 et 10.

Afin de permettre l'accrochage de la poignée 4 sur le corps 3 du récipient 2, on souhaite former dans le corps 3 au moins une empreinte 5, 6 en creux avec laquelle coopérera une griffe 7, 8 de la poignée 4.

Plus précisément, suivant un mode de réalisation illustré sur les figures 9 et 10, l'on souhaite former dans le corps 3 du récipient 2 deux empreintes 5, 6 antagonistes, c'est-à-dire dont les concavités respectives sont opposées, destinées à recevoir deux griffes 7, 8 de la poignée 4, dont elles sont complémentaires.

Il sera expliqué ultérieurement comment est effectué le montage de la poignée 4 sur le corps 3 du récipient 2 ; les moyens destinés à former les empreintes 5, 6, et leur mise en oeuvre sont maintenant détaillés.

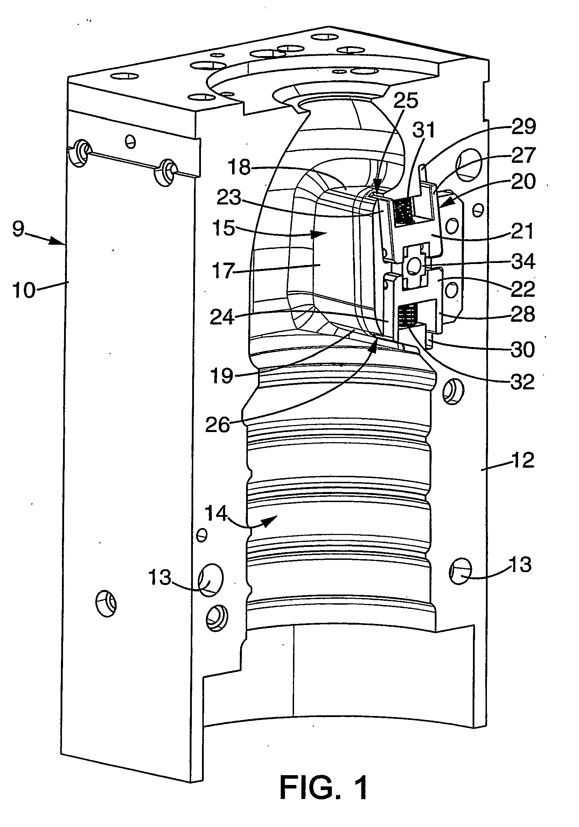

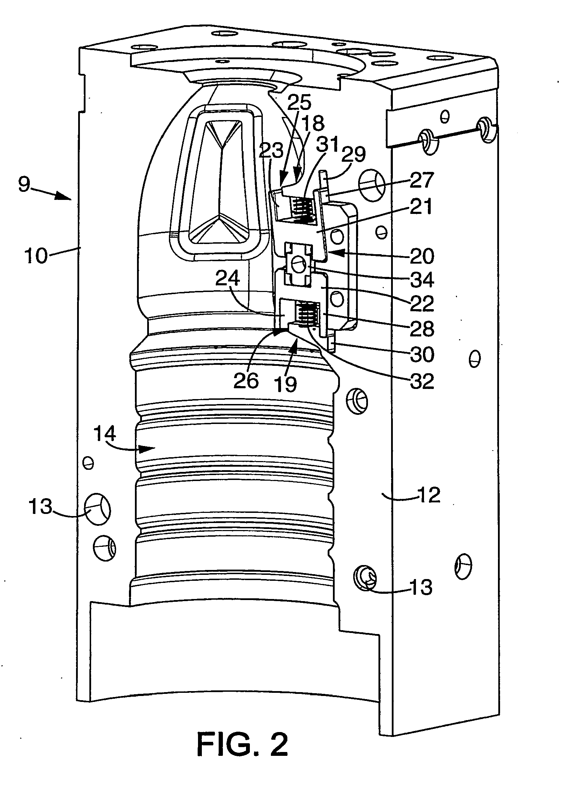

Sur les figures 1 à 6 est représenté un moule 9 destiné à équiper une machine de soufflage (non représentée), pour le formage des récipients 2.

Ce moule 9 est formé par assemblage de deux demi moules 10, 11 dont l'un 10 est représenté seul sur les figures 1, 2, 3 et 5.

Le moule 9 comporte une paroi 12, par exemple réalisée dans un alliage d'aluminium, et percée de conduits 13 pour la circulation d'un liquide caloporteur pour la chauffe ou le refroidissement du moule 9. Cette paroi 12 définit une cavité 14, réalisée par un usinage de précision, destinée à recevoir l'ébauche 1, comme illustré sur la figure 3, et dont la forme correspond à celle du récipient 2 à former.

Comme cela est visible sur la figure 1, la cavité 14 est globalement répartie autour d'un axe principal X qui s'étend suivant la plus grande dimension de la cavité 14 (c'est-à-dire du récipient 2), à l'exception d'une zone dans laquelle la paroi 12 présente une excroissance 15 qui s'étend en saillie vers l'intérieur de la cavité 14, cette excroissance 15 étant destinée à former sur le corps 3 du récipient 2, lors du soufflage, une réserve 16 en creux de dimension suffisante pour accueillir la main d'un utilisateur, réserve 16 dans laquelle sera montée la poignée 4.

L'excroissance 15 présente une face latérale 17, sensiblement plane et parallèle à l'axe X principal de la cavité 14, prolongée vers le haut et vers le bas, respectivement par une face supérieure 18 et une face inférieure 19, également planes, mais obliques par rapport à l'axe X principal.

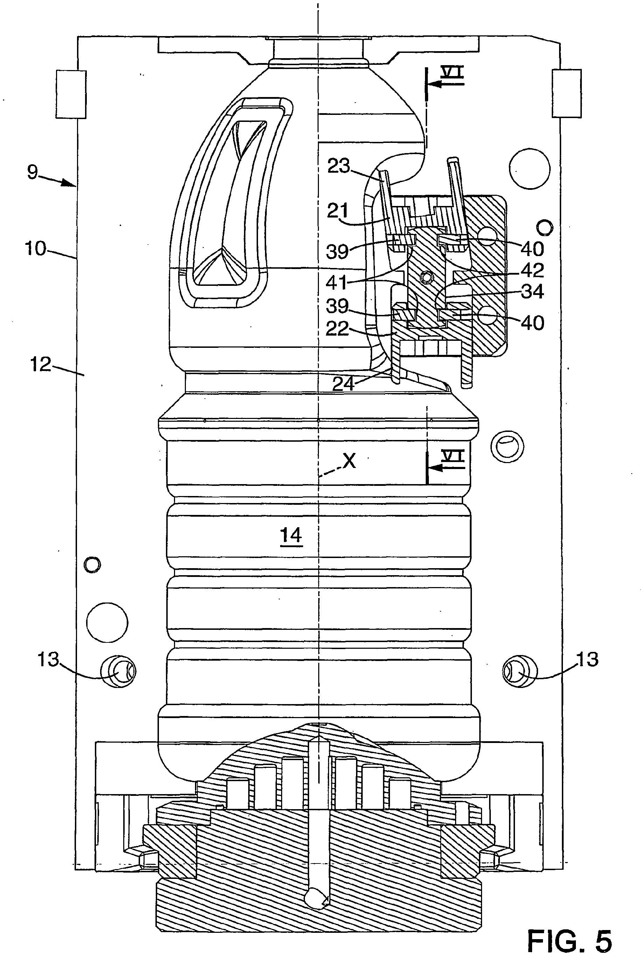

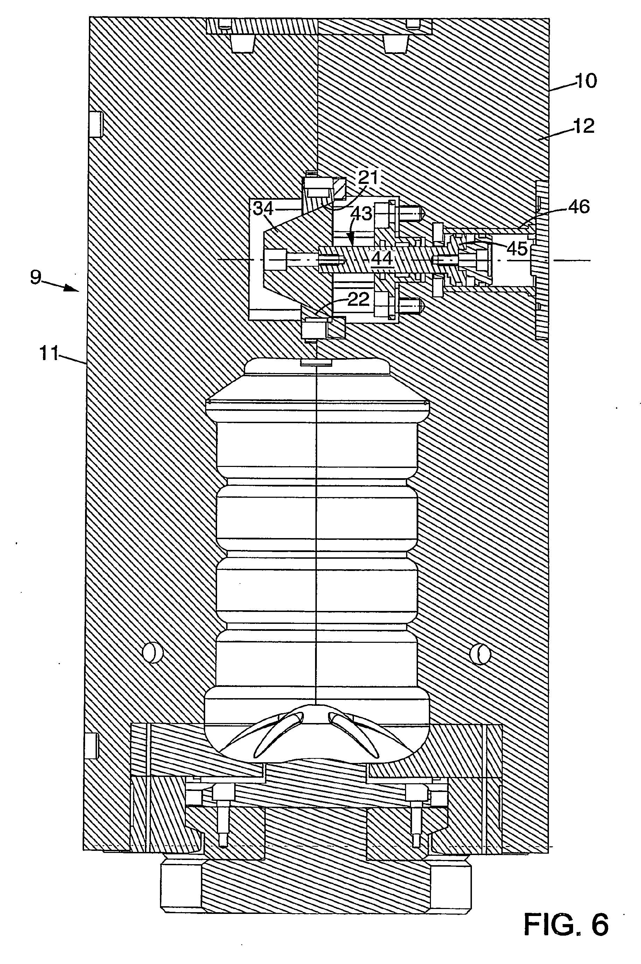

Le moule 9 comporte un dispositif 20 spécifique pour la formation des empreintes 5, 6, monté dans la paroi 12, et qui comporte deux inserts 21, 22 dits de moulage, à savoir un insert 21 supérieur et un insert 22 inférieur, reçus dans l'excroissance 15 et munis chacun d'un ergot 23, 24 respectif, chacun de ces inserts étant monté dans la paroi 12 en étant déplaçables par rapport à celle-ci entre :
- une position sortie dans laquelle chaque ergot 23, 24 s'étend au moins en partie en saillie par rapport à la paroi 12, vers l'intérieur de la cavité 14, sensiblement parallèlement à l'axe X principal (figures 5 et 6), et
- une position rétractée dans laquelle chaque ergot 23, 24 se trouve escamoté à l'intérieur de la paroi 12 (figures 1 à 4).

En position sortie, l'ergot 23 de l'insert 21 supérieur s'étend en saillie par rapport à la face supérieure 18 de l'excroissance 15, tandis que l'ergot 24 de l'insert 22 inférieur s'étend en saillie par rapport à la face inférieure 19 de l'excroissance 15.

Plus précisément, chaque insert 21, 22 est monté mobile en translation par rapport à la paroi 12, sensiblement parallèlement à l'axe X principal de la cavité 14. Les mouvements respectifs des inserts 21, 22 sont à la fois synchronisés et antagonistes. Autrement dit, les inserts 21, 22 occupent simultanément leur position sortie d'une part, et leur position rétractée d'autre part, le passage de l'une à l'autre de ces positions s'effectuant simultanément pour les deux inserts 21, 22.

Le guidage de chaque insert 21, 22 est assuré, d'une part, par l'ergot 23, 24 qui traverse une lumière 25, 26 complémentaire formée dans la paroi 12 et débouchant dans la cavité 14 et, d'autre part, par un doigt 27, 28 reçu dans une rainure 29, 30 complémentaire formée dans la paroi 12 du moule 9. Des ressorts 31, 32 de rappel sollicitent en permanence les inserts 21, 22 vers leur position rétractée.

Suivant un mode de réalisation illustré sur les figures, les inserts 21, 22 sont des suiveurs de came, le dispositif 20 comportant un mécanisme 33 d'actionnement muni d'une came 34 agissant conjointement sur les deux inserts 21, 22, et montée dans la paroi 12 en étant mobile par rapport à celle-ci entre :
- une position inactive dans laquelle la came 34 permet aux inserts 21, 22 d'occuper leur position rétractée, et
- une position active dans laquelle la came 34 repousse les inserts 21, 22 vers leur position sortie.

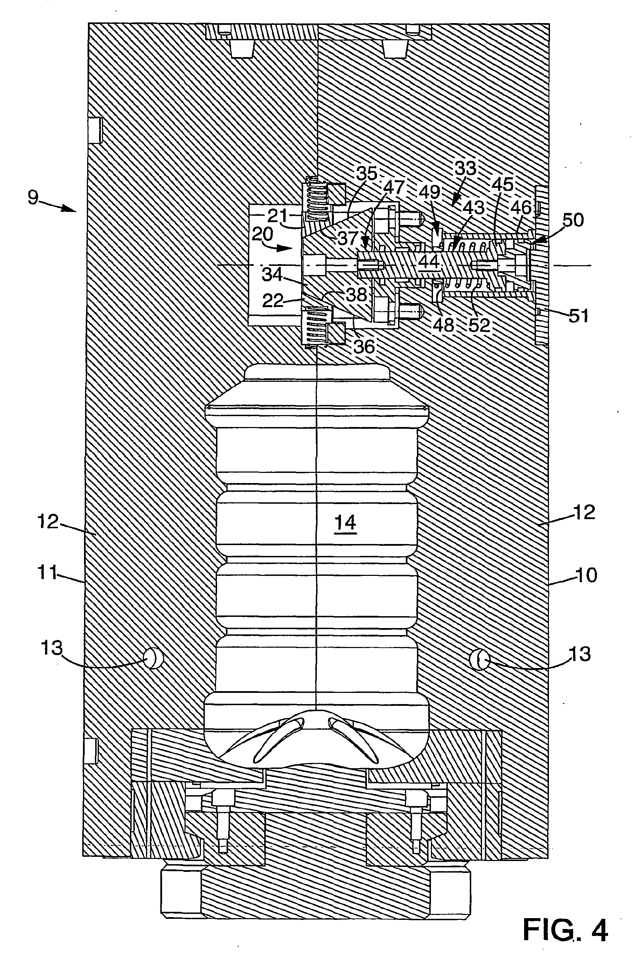

Suivant un mode de réalisation illustré sur les figures, et comme cela est plus particulièrement visible sur les figures 4 et 6, la came 34 est déplaçable en translation suivant une direction perpendiculaire à l'axe X principal.

Comme cela est représenté notamment sur la figure 6, la came 34 a un profil sensiblement trapézoïdal, et présente deux surfaces 35, 36 de came obliques par rapport à la direction de déplacement de la came 34, chacune de ces surfaces 35, 36 coopérant avec une surface 37, 38 d'appui, ménagée sur chaque insert 21, 22 à l'opposé de l'ergot 23, 24, et oblique par rapport à la direction de déplacement de l'insert 21, 22.

Afin de permettre un guidage précis des inserts 21, 22, chacun d'eux est muni d'au moins un pion 39, 40 qui s'étend en saillie perpendiculairement à la direction de déplacement de l'insert 21, 22, ce pion 39, 40 coopérant avec une rainure 41, 42 ménagée dans la came 34 parallèlement à la surface 35, 36 de came. En pratique, deux pions 39, 40 sont en fait prévus de part et d'autre de chaque insert 21, 22, la came 34 étant quant à elle munie de quatre rainures 41, 42 symétriques deux à deux, chacune propre à recevoir un pion 39, 40.

Comme cela est bien visible sur les figures 4 et 6, le mécanisme 33 d'actionnement comporte un vérin 43 pneumatique muni d'une tige 44 dont une première extrémité 45 est conformée en un piston monté coulissant dans un cylindre 46 formé dans la paroi 12, la came 34 étant montée sur une seconde extrémité 47 de la tige 44, opposée à la première 45.

Une rondelle 48 ferme une extrémité 49 du cylindre 46, située du côté de la came 34, une extrémité opposée 50 du cylindre 46 étant fermée par une plaque 51, rapportée fixée par l'extérieur du moule 9 sur la paroi 12. Un ressort 52 de rappel, monté dans le cylindre 46 et interposé entre la première extrémité 45 conformée en piston de la tige 44 du vérin 43 et cette rondelle 48, sollicite en permanence la came 34, par l'intermédiaire de la tige 44, vers sa position inactive, tel qu'illustré sur la figure 4.

On décrit à présent le procédé de fabrication du récipient 2, mettant en oeuvre le moule 9 qui vient d'être décrit.

Ce procédé comporte en premier lieu une étape d'introduction de l'ébauche 1 dans la cavité 14, tandis que, la came 34 étant dans sa position inactive, les inserts 21, 22 sont dans leur position rétractée (figure 3).

Cette étape d'introduction, classique, est réalisée de manière connue, moule 9 ouvert (c'est-à-dire que les deux demi moules 10, 11 sont écartés l'un de l'autre), l'ébauche 1 étant amenée transversalement, chaude, au moyen d'un dispositif de transfert approprié, tel qu'un bras de transfert (non représenté).

Le moule 9 étant refermé, on procède ensuite au soufflage ou à l'étirage-soufflage de l'ébauche de manière connue en soi.Le mécanisme 33 d'actionnement est commandé pendant le soufflage ou l'étirage-soufflage de l'ébauche 1 de sorte à sortir les ergots 23, 24 avant que ceux-ci ne soient atteints par le récipient en cours de formation.

A cet effet, on peut raccorder pneumatiquement, au moyen d'une dérivation, le cylindre 46 au circuit d'alimentation de l'ébauche 2 (typiquement le circuit d'alimentation des tuyères de soufflage dans les machines du type de celles de la demanderesse), l'actionnement du vérin 43 étant ainsi réalisé dès la mise sous pression de l'ébauche 1.

Compte tenu de sa plasticité, la matière du récipient 2 vient au contact de la paroi de la cavité 14 jusqu'autour des ergots 23, 24 qu'elle épouse pour former les empreintes 5, 6 (complémentaires des ergots 23 et 24, donc) destinées à recevoir ultérieurement les griffes 7, 8 de la poignée 4.

A la fin du soufflage ou de l'étirage-soufflage, la pression dans le récipient 2 est ramenée à la pression atmosphérique, les inserts 21, 22 étant alors ramenés à leur position rétractée par une action combinée des ressorts 31, 32 de rappel et du mouvement inversé du vérin 43, pour permettre le démoulage du récipient 2.

On ouvre alors le moule 9 dont on retire le récipient 2 ainsi formé, sur le corps 3 duquel on fixe ensuite la poignée 4. Celle-ci comporte un corps 53 en forme d'anneau ouvert, muni d'une languette 54 flexible portant à une extrémité libre une dent 55 qui vient s'encliqueter dans un logement 56 complémentaire formé dans une partie du corps 53 en regard. Ainsi, la poignée 4 peut adopter deux configurations, à savoir :
- une configuration ouverte, représentée sur la figure 9, dans laquelle la languette 54 est repliée à l'intérieur de la boucle formée par le corps 53, et où la dent 55 se trouve à distance de son logement 56 ; dans cette configuration, sous l'effet de l'élasticité de la poignée 4, la distance séparant les extrémités des griffes 7, 8 est inférieure à la distance séparant leurs empreintes 5, 6 respectives, de manière à permettre l'introduction sans effort de la poignée 4 dans la réserve 16, et
- un configuration fermée, représentée sur la figure 10, dans laquelle, après avoir mis en place la poignée 4 et poussé la languette 54 jusqu'à encliquetage de la dent 55 dans son logement 56, les griffes 7, 8 sont reçues de manière inamovible dans leurs empreintes 5, 6, sauf à replacer la poignée 4 dans sa configuration ouverte par action sur la languette 54, par exemple pour permettre à une même poignée 4 d'être réutilisée sur plusieurs récipients successifs à mesure que ceux-ci sont vidés de leurs contenus.

On comprend qu'il est ainsi possible de réaliser, de manière simple, par soufflage, un récipient 2 à poignée 4 rapportée, celle-ci étant montée après que le corps 3 du récipient 2 a été formé.

D'une part, il ne résulte des dispositions qui précèdent aucune complication excessive de la fabrication et de la structure du moule. D'autre part, le procédé qui vient d'être décrit n'impose pas une diminution de la cadence par rapport à un soufflage classique, les étapes de sortie et de rétractation des inserts de moulage étant réalisées en temps masqué pendant les étapes ordinaires du soufflage (étirage, dégazage).

## Revendications

1. Moule (9) pour une machine de soufflage de récipients (2) à partir d'ébauches (1), ce moule (9) comportant une paroi (12) définissant une cavité (14) destinée à recevoir une ébauche (1), ainsi qu'au moins un insert (21, 22) de moulage qui, muni d'un ergot (23, 24), est monté déplaçable par rapport à la paroi (12), entre :
- une position sortie dans laquelle l'ergot (23, 24) s'étend au moins en partie en saillie par rapport à la paroi (12), vers l'intérieur de la cavité (14), et
- une position rétractée dans laquelle l'ergot (23, 24) se trouve escamoté à l'intérieur de la paroi (12),
ce moule étant **caractérisé en ce que** l'insert (21, 22) de moulage est un suiveur de came, et **en ce que** le moule (9) comporte un mécanisme (33) d'actionnement qui comprend une came (34) montée mobile par rapport à la paroi (12), entre :
- une position inactive dans laquelle la came (34) permet à l'insert (21, 22) d'adopter sa position rétractée, et
- une position active dans laquelle la came (34) pousse l'insert (21, 22) vers sa position sortie.

2. Moule (9) selon la revendication 1, **caractérisé en ce que**, la cavité (14) s'étendant suivant un axe (X) principal, l'ergot (23, 24) s'étend, dans la position sortie, sensiblement parallèlement à l'axe (X) principal.

3. Moule (9) selon la revendication 1 ou 2, **caractérisé en ce que** l'insert (21, 22) de moulage est monté mobile en translation par rapport à la paroi (12) du moule (9).

4. Moule (9) selon l'une des revendications 1 à 3,
**caractérisé en ce que** la paroi (12) du moule (9) présente une excroissance (15) vers l'intérieur de la cavité (14), et **en ce que** l'insert (21, 22) de moulage est reçu dans cette excroissance (15).

5. Moule (9) selon la revendication 4, **caractérisé en ce que** l'insert (21, 22) est déplaçable en translation suivant une direction parallèle à un axe (X) principal de la cavité (14), et **en ce que** la came (34) est déplaçable en translation suivant une direction perpendiculaire à cet axe (X) principal.

6. Moule (9) selon la revendication 5, **caractérisé en ce que** la came (34) présente une surface (35, 36) de came oblique par rapport à la direction de déplacement de la came (34), qui coopère avec une surface (37, 38) d'appui ménagée sur l'insert (21, 22), oblique par rapport à la direction de déplacement de l'insert (21, 22).

7. Moule (9) selon la revendication 6, **caractérisé en ce que** l'insert (21, 22) est muni d'au moins un pion (39, 40) qui s'étend en saillie perpendiculairement à la direction de déplacement de l'insert (21, 22), ce pion (39, 40) coopérant avec une rainure (41, 42) ménagée dans la came (34) parallèlement à la surface (35, 36) de came.

8. Moule (9) selon l'une des revendications 1 à 7, **caractérisé en ce que** le mécanisme (33) d'actionnement comporte un ressort (52) de rappel qui sollicite la came (34) vers sa position inactive.

9. Moule (9) selon l'une des revendications 1 à 8, **caractérisé en ce que** le mécanisme (33) d'actionnement comporte un vérin (43) muni d'une tige (44) à une extrémité (47) de laquelle est montée la came (34).

10. Moule (9) selon l'une des revendications 1 à 9, **caractérisé en ce qu'**il comporte un ressort (31, 32) de rappel qui sollicite l'insert (21, 22) vers sa position rétractée.

11. Moule selon l'une des revendications 1 à 10, **caractérisé en ce qu'**il comporte deux inserts (21, 22) munies chacune d'un ergot (23, 24), et déplaçables conjointement par rapport à la paroi (12), entre :
- une position sortie dans laquelle les ergots (23, 24) s'étendent tous deux au moins en partie en saillie par rapport à la paroi (12), vers l'intérieur de la cavité (14), et
- une position rétractée dans laquelle les ergots (23, 24) se trouvent tous deux escamotés à l'intérieur de la paroi (12).

12. Procédé de fabrication d'un récipient (2) par soufflage à partir d'une ébauche (1) en matière thermoplastique, ce procédé mettant en oeuvre un moule (9) comportant une paroi (12) définissant une cavité (14) destinée à recevoir une ébauche (1), ainsi qu'au moins un insert (21, 22) de moulage qui, muni d'un ergot (23, 24), est monté déplaçable par rapport à la paroi (12), entre :
- une position sortie dans laquelle l'ergot (23, 24) s'étend au moins en partie en saillie par rapport à la paroi (12), vers l'intérieur de la cavité (14), et
- une position rétractée dans laquelle l'ergot (23, 24) se trouve escamoté à l'intérieur de la paroi (12),
ce procédé comportant les étapes consistant à _{:}
- introduire l'ébauche (1) dans la cavité (14) ;
- placer l'insert (21, 22) de moulage, qui est un suiveur de came, dans sa position sortie à l'aide d'un mécanisme (33) d'actionnement qui comprend une came (34) montée mobile par rapport à la paroi (12), entre une position inactive dans laquelle la came (34) permet à l'insert (21, 22) d'adopter sa position rétractée, et une position active dans laquelle la came (34) pousse l'insert (21, 22) vers sa position sortie ;
- former le récipient (2) par soufflage ou étirage/soufflage de l'ébauche (1) dans la cavité (14) de sorte à laisser sur le récipient formé au moins une empreinte (5, 6) en creux, complémentaire dudit ergot (23, 24) ;
- une fois le récipient (2) formé, placer l'insert (21, 22) de moulage dans sa position rétractée ;
- retirer du moule (9) le récipient (2) ainsi formé.

13. Procédé selon la revendication 12, **caractérisé en ce que** l'étape de mise en place de l'insert (21, 22) est réalisée pendant l'étape de soufflage avant que la matière de l'ébauche (1) n'atteigne les ergots.

14. Procédé selon l'une des revendications 12 ou 13, comportant une étape consistant, après formation du récipient (2), à monter sur celui-ci une poignée (4) rapportée munie d'au moins une griffe (7, 8) apte à coopérer de manière amovible avec une empreinte (5, 6) en creux formée, dans le corps (3) du récipient (2), par l'ergot (23, 24) de l'insert (21, 22) de moulage lors du formage du récipient (2).

## Claims

1. A mold (9) for a machine for blow molding containers (2) from preforms (1), this mold (9) comprising a wall (12) defining a cavity (14) intended to receive a preform (1), in addition to at least one mold insert (21, 22) which, provided with a lug (23, 24), is displaceably mounted relative to the wall (12) between:
- an extended position in which the lug (23, 24) projects at least partially relative to the wall (12), into the cavity (14), and
- a retracted position in which the lug (23, 24) is retracted into the wall (12),
said mold being **characterized in that** the mold insert (21, 22) is a cam follower, and **in that** the mold (9) comprises an actuating mechanism (33) which comprises a cam (34) mounted mobile relative to the wall (12), between:
- an inactive position in which the cam (34) allows the insert (21, 22) to adopt its retracted position, and
- an active position in which the cam (34) pushes the insert (21, 22) toward its extended position.

2. The mold (9) as claimed in claim 1, **characterized in that** as the cavity (14) extends along a principal axis (X), the lug (23, 24) extends, in the extended position, substantially parallel to the principal axis (X).

3. The mold (9) as claimed in claim 1 or 2, **characterized in that** the mold insert (21, 22) is mounted mobile in translation relative to the wall (12) of the mold (9).

4. The mold (9) as claimed in one of claims 1 to 3, **characterized in that** the wall (12) of the mold (9) has a protuberance (15) toward the inside of the cavity (14) and **in that** the mold insert (21, 22) is received in this protuberance (15).

5. The mold (9) as claimed in claim 4, **characterized in that** the insert (21, 22) is displaceable in translation in a direction parallel to a principal axis (X) of the cavity (14) and **in that** the cam (34) is displaceable in translation in a direction perpendicular to this principal axis (X).

6. The mold (9) as claimed in claim 5, **characterized in that** the cam (34) has a cam surface (35, 36) which is oblique relative to the direction of displacement of the cam (34) which cooperates with a bearing surface (37, 38) made on the insert (21, 22) and which is oblique relative to the direction of displacement of the insert (21, 22).

7. The mold (9) as claimed in claim 6, **characterized in that** the insert (21, 22) is provided with at least one pin (39, 40) which projects perpendicularly to the direction of displacement of the insert (21, 22), said pin (39, 40) cooperating with a groove (41, 42) made in the cam (34) parallel to the cam surface (35, 36).

8. The mold (9) as claimed in one of claims 1 to 7, **characterized in that** the actuating mechanism (33) comprise a return spring (52) which urges the cam (34) toward its inactive position.

9. The mold (9) as claimed in one of claims 1 to 8, **characterized in that** the actuating mechanism (33) comprises a ram (43) provided with a rod (44), at one end (47) of which the cam (34) is mounted.

10. The mold (9) as claimed in one of claims 1 to 9, **characterized in that** it comprises a return spring (31, 32) which urges the insert (21, 22) toward its retracted position.

11. The mold as claimed in one of claims 1 to 10, **characterized in that** it comprises two inserts (21, 22) each provided with a lug (23, 24) and jointly displaceable relative to the wall (12), between:
- an extended position in which the lugs (23, 24) project both at least partially relative to the wall (12) into the cavity (14), and
- a retracted position in which the lugs (23, 24) are both retracted into the wall (12).

12. A method for producing a container (2) by blow molding from a preform (1) made of thermoplastic material, said method using a mold (9) comprising a wall (12) defining a cavity (14) intended to receive a preform (1), in addiction to at least one mold insert (21, 22) which, provided with a lug (23, 24), is displaceably mounted relative to the wall (12), between:
an extended position in which the lug (23, 24) projects at least partially relative to the wall (12), into the cavity (14), and
- a retracted position in which the lug (23, 24) is retracted into the wall (12),
said method comprising the steps consisting of:
- introducing the preform (1) into the cavity (14);
- placing the mold insert (21, 22) which is a camfollower in its extended position with the help of an actuating mechanism (33) which comprises a cam (34) mounted mobile relative to the wall (12), between an inactive position in which the cam (34) allows the insert (21, 22) to adopt its retracted position, and an active position in which the cam (34) pushes the insert (21, 22) towards its extended postion;
- forming the container (2) by blow molding or stretch blow molding of the preform (1) in the cavity (14) so as to allow at least one hollow impression (5, 6) on the formed container, complementary to said lug (23, 24);
- once the container (2) is formed, placing the mold insert (21, 22) in its retracted position;
- removing the container (2) thus formed from the mold (9) .

13. The method as claimed in claim 12, **characterized in that** the step for positioning the insert (21, 22) is carried out during the blow molding step before the material of the preform (1) reaches the lugs.

14. The method as claimed in one of claims 12 or 13, comprising a step consisting, after the formation of the container (2), in mounting thereon a detachable handle (4) provided with at least one claw (7, 8) capable of cooperating in a removable manner with a hollow impression (5, 6) formed, in the body (3) of the container (2) by the lug (23, 24) of the mold insert (21, 22) during the forming of the container (2) .

## Patentansprüche

1. Form (9) für eine Maschine zum Blasformen von Behältern (2) aus Vorformlingen (1), wobei diese Form (9) eine Wand (12) aufweist, die einen Hohlraum (14) definiert, der dafür bestimmt ist, einen Vorformling (1) aufzunehmen, sowie mindestens einen Formungseinsatz (21, 22), der, mit einem Ansatz (23, 24) versehen, so eingebaut ist, dass er relativ zur Wand (12) bewegt werden kann zwischen:
- einer herausragenden Position, in der der Ansatz (23, 24) in Richtung des Innenraums des Hohlraums (14) zumindest teilweise aus der Wand (12) herausragt, und
- einer zurückgezogenen Position, in der sich der Ansatz (23, 24) eingezogen im Inneren der wand (12) befindet,
wobei diese Form **dadurch gekennzeichnet ist, dass** der Formungseinsatz (21, 22) ein Nackenfolgeglied ist, und dadurch, dass die Form (9) einen Antriebsmechanismus (33) aufweist, der einen Nocken (34) umfasst, der so befestigt ist, dass er relativ zur wand (12) bewegt werden kann zwischen:
- einer inaktiven Position, in der der Nocken (34) den Einsatz (21, 22) seine zurückgezogene Position einnehmen lässt, und
- einer aktiven Position, in der der Nocken (34) den Einsatz (21, 22) in seine herausragende Position drückt.

2. Form (9) nach Anspruch 1, **dadurch gekennzeichnet, dass,** während sich der Hohlraum (14) entlang einer Hauptachse (X) erstreckt, sich der Ansatz (23, 24) in der herausragenden Position im Wesentlichen parallel zur Hauptachse (X) erstreckt.

3. Form (9) nach Anspruch 1 oder 2, **dadurch gekennzeichnet, dass** der Formungseinsatz (21, 22) relativ zur Wand (12) der Form (9) geradlinig bewegbar eingebaut ist.

4. Form (9) nach einem der Anspruche 1. bis 3, **dadurch gekennzeichnet, dass** die wand (12) der Form (9) eine Ausstülpung (15) in Richtung des Innenraums des Hohlraums (14) aufweiset, und **dadurch**, dass der Formungseinsatz (21, 22) in dieser Ausstülpung (15) aufgenommen ist.

5. Form (9) nach Anspruch 4, **dadurch gekennzeichnet, dass** sich der Einsatz (21, 22) in einer Richtung parallel zu einer Hauptachse (X) des Hohlraums (14) geradlinig bewegen kann, und **dadurch**, dass sich der Nocken (34) in einer Richtung senkrecht zu dieser Hauptachse (X) geradlinig bewegen kann.

6. Form (9) nach Anspruch 5, **dadurch gekennzeichnet, dass** der Nocken (34) eine Nockenfläche (35, 36) schräg zur Bewegungsrichtung des Nockens (34) aufweist, die mit einer Auflagefläche (37, 38) zusammenwirkt, die am Einsatz (21, 22) vorgesehen ist und schräg zur Bewegungsrichtung des Einsatzes (21, 22) verläuft.

7. Form (9) nach Anspruch 6, **dadurch gekennzeichnet, dass** der Einsatz (21, 22) mit mindestens einem Stift (39, 40) versehen ist, der senkrecht zur Bewegungsrichtung des Einsatzes (21, 22) übersteht, wobei dieser Stift (39, 40) mit einer Nut (41, 42) zusammenwirkt, die in dem Nocken (34) parallel zur Nockenfläche (35, 36) vorgesehen ist.

8. Form (9) nach einem der Ansprüche 1 bis 7, **dadurch gekennzeichnet, dass** der Antriebsmechanismus (33) eine Rückholfeder (52) aufweist, die den Nocken (34) in seine inaktive Position bringt.

9. Form (9) nach einem der Ansprüche 1 bis 8, **dadurch gekennzeichnet, dass** der Antriebsmechanismus (33) einen zylinder (43) aufweist, der mit einem Schaft (44) versehen ist, an dessen einem Ende (47) der Nocken (34) angebracht ist.

10. Form (9) nach einem der Ansprüche 1 bis 9, **dadurch gekennzeichnet, dass** sie eine Rückstellfeder (31, 32) aufweist, die den Einsatz (21, 22) in seine zurückgezogene Position bringt.

11. Form nach einem der Ansprüche 1 bis 10, **dadurch gekennzeichnet, dass** sie zwei Einsätze (21, 22) aufweist, die jeweils mit einem Ansatz (23, 24) versehen sind und gemeinsam relativ zur wand (12) bewegt werden können zwischen:
- einer herausragenden Position, in der die Ansätze (23, 24) alle beide in Richtung des Innenraums des Hohlraums (14) zumindest teilweise aus der Wand (12) herausragen, und
- einer zurückgezogenen Position, in der sich die Ansätze (23, 24) alle beide eingezogen im Inneren der Wand (12) befinden.

12. Verfahren zur Herstellung eines Behälters (2) durch Blasformen aus einem Vorformling (1) aus einem thermoplastischen Werkstoff, wobei bei diesem Herfahren eine Form (9) eingesetzt wird, die eine wand (12) aufweist, die einen Hohlraum (14) definiert, der dafür bestimmt ist, einen Vorformling (1) auszunehmen, sowie mindestens einen Formungseinsatz (21, 22), der, mit einem Ansatz (23, 24) versehen, relativ zur Wand (12) bewegt werden kann zwischen:
- einer herausragenden Position, in der der Ansatz (23, 24) in Richtung des Innenraums des Hohlraums (14) zumindest teilweise aus der Wand (12) herausragt, und
- einer zurückgezogenen Position, in der sich der Ansatz (23, 24) eingezogen im Inneren der Wand (12) befindet,
wobei dieses Verfahren die Schritte umfasst, die darin bestehen:
- den Vorformling (1) in den Hohlraum (14) einzubringen;
- den Formungseinsatz (21, 22), der ein Nackenfolgeglied ist, mithilfe eines Antriebsmechanismus (33), der einen Nocken (34) umfasst, der so befestigt ist, dass er relativ zur Wand (12) bewegt werden kann zwischen einer inaktiven Position, in der der Nocken (34) den Einsatz (21, 22) seine zurückgezogene Position einnehmen lässt, und einer aktiven Position, in der der Nocken (34) den Einsatz (21, 22) in seine herausragende Position drückt, in seine herausragende Position zu bringen;
- den Behälter (2) durch Blasformen oder Streckblasen des Vorformlings (1) in dem Hohlraum (14) so herzustellen, dass auf dem hergestellten Behälter mindestens eine Vertiefung (5, 6) verbleibt, die diesem Ansatz (23, 24) entspricht;
- den Formungseinsatz (21, 22) in seine zurückgezogene Position zu bringen, sobald der Behälter (2) hergestellt ist;
- den so hergestellten Behälter (2) aus der Form (9) zu entnehmen.

13. Verfahren nach Anspruch 12, **dadurch gekennzeichnet, dass** der Schritt des Plazierens des Einsatzes (21, 22) während des Schritts des Blasformens erfolgt, bevor das Material des Vorformlings (1) die Ansätze erreicht.

14. Verfahren nach Anspruch 12 oder 13, das einen Schritt umfasst, der nach der Herstellung des Behälters (2) darin besteht, an diesem einen angesetzten Griff (4) anzubringen, der mit mindestens einem Greifelement (7, 8) versehen ist, das herausnehmbar mit einer Vertiefung (5, 6) zusammenwirken kann, die bei der Herstellung des Behälters (2) im Körper (3) des Behälters (2) durch den Ansatz (23, 24) des Formungseinsatzes (27, 22) entstanden ist.
